# EUROPEAN PATENT SPECIFICATION

(11) **EP 3 889 766 B1**
(45) Date of publication and mention of the grant of the patent: **24.01.2024**
(21) Application number: 19901007.5
(22) Date of filing: 28.06.2019
(51) Int. Cl.: G06F 8/654, G06F 21/57, G06F 8/71

(54) **SECURE FIRMWARE UPGRADE METHOD, DEVICE, ON-BOARD SYSTEM, AND VEHICLE**
GESICHERTES FIRMWARE-AKTUALISIERUNGSVERFAHREN, VORRICHTUNG, BORDSYSTEM UND FAHRZEUG
PROCÉDÉ DE MISE À NIVEAU SÉCURISÉE DE MICROPROGRAMME, DISPOSITIF, SYSTÈME EMBARQUÉ, ET VÉHICULE

(30) Priority: 19.12.2018 CN 201811558091
(43) Date of publication of application: 06.10.2021
(73) Proprietor: Guangzhou Xiaopeng Motors Technology Co., Ltd., Guangzhou, Guangdong 510000 (CN)
(72) Inventor: TAN, Weihua, Guangzhou, Guangdong 510000 (CN)
(74) Representative: Habermann, Hruschka & Schnabel
(86) International application number: PCT/CN2019/093435
(87) International publication number: WO 2020/124985

(56) References cited:
- CN-A- 106 843 932
- US-A1- 2018 300 477
- Khodari Mohammad: "Decentralized firmware attestation for in-vehicle networks", , 14 June 2018 (2018-06-14), pages 1-80, XP055916155, Retrieved from the Internet: URL:http://www.diva-portal.org/smash/get/d iva2:1214837/FULLTEXT02.pdf [retrieved on 2022-04-28] & Khodari Mohammad: "Decentralized firmware attestation for in-vehicle networks (bibliographic record)", , 14 June 2018 (2018-06-14), XP055916162, Retrieved from the Internet: URL:http://liu.diva-portal.org/smash/recor d.jsf?pid=diva2:1214837&dswid=-6005 [retrieved on 2022-04-28]
- NILSSON D K ET AL: "A Framework for Self-Verification of Firmware Updates over the Air in Vehicle ECUs", 2008 IEEE GLOBECOM WORKSHOPS; 30 NOV.-4 DEC. 2008; NEW ORLEANS, LA, USA, IEEE, PISCATAWAY, NJ, USA, 30 November 2008 (2008-11-30), pages 1-5, XP031405600, ISBN: 978-1-4244-3061-1

## Description

### TECHNICAL FIELD

The present disclosure belongs to the field of information security technologies, and more particularly, relates to a secure firmware upgrade method, a device, an in-vehicle system, and a vehicle.

### BACKGROUND

Firmware is a program written into an Erasable Read-Only Memory (EROM) or an Electrically Erasable Programmable Read-Only Memory (EEPROM), and is a "driver" stored inside a device. Through the firmware, an operating system can realize a running action of a specific machine according to a standard device driver. A firmware upgrade refers to upgrading embedded firmware of the device, which can improve functions of the device, enhance stability, and repair vulnerabilities.

In the related art, all interfaces for firmware upgrades in the device are at risk of malicious use by an attacker. The attacker may hijack a channel for a firmware upgrade and write a self-made firmware upgrade package into the device. In this way, a corresponding module of the device is controlled, or even the entire device is controlled in a Controller Area Network (CAN) bus, so as to achieve purposes such as stealing a control right of the device, and stealing data. Therefore, for occasions with extremely high security requirements such as smart vehicles, security of firmware upgrades is very important. A controller of a smart vehicle should be prevented from being stolen in an illegal firmware upgrade.

In order to ensure the security of the firmware upgrades of the device, it is usually possible to ensure that an original firmware upgrade package is not tampered with during a writing process of the firmware upgrade package. However, it is neither possible to monitor whether a firmware upgrade package actually running in the device subsequently is the original firmware upgrade package written into the device, nor possible to perform security verification on a firmware upgrade package version. That is, the attacker may bypass security restrictions of an upgrade channel, write the self-made firmware upgrade package into the device, and run the self-made firmware upgrade package, which poses a security risk.

Prior art document D1, "Decentralized firmware attestation for in-vehicle networks" by Khodari Mohammad, 14 June 2018 (2018-06-14), pages 1-80, Retrieved from the Internet (URL: http:// www.diva-portal.org/smash/get/diva2:1214837/FULLTEXT02.pdf) discloses post-update verification of a firmware update installed in a vehicle's ECU by comparing a hash of the contents of the flash memory containing the updated firmware with a corresponding expected hash value.

The following further prior art documents disclose similar approaches to the verification of firmware updates:
D2: US 2018/300477 A1 (GALULA YARON [IL] ET AL), 18 October 2018 (2018-10-18)
D3: NILSSON D K ET AL: "A Framework for Self-Verification of Firmware Updates over the Air in Vehicle ECUs", 2008 IEEE GLOBECOM WORKSHOPS; 30 NOV.-4 DEC. 2008; NEW ORLEANS, LA, USA, IEEE, PISCATAWAY, NJ, USA, 30 November 2008 (2008-11-30), pages 1-5, ISBN: 978-1-4244-3061-1
D4: CN 106 843 932 A (GOER TECH CO LTD), 13 June 2017 (2017-06-13)

In addition, for a situation where the firmware upgrade package is written through accessing the bus via a physical interface, e.g., the firmware upgrade package is written through accessing the bus via an On Board Diagnostics (OBD) interface,most of the security detection mechanisms can be bypassed to write the firmware upgrade package made by the attacker. If the attacker maliciously writes the firmware through the above method, and there is no corresponding detection mechanism and warning mechanism in the device, the user will not be able to sense the writing.

### SUMMARY

The invention is set out in the independent claims. Particular embodiments of the invention are the subject of the dependent claims.

Beneficial effects of the present disclosure are as follows. The secure firmware upgrade method, the device, thein-vehicle system, and the vehicle according to an embodiment of the present disclosure are applicable to Over-the-Air (OTA) upgrades and On Board Diagnostics (OBD) interface upgrades. By packing a preset response algorithm in a firmware upgrade package in advance, after a device completes writing of firmware, a security verification and verification instruction is transmitted to perform security verification by validating a response instruction generated by the response algorithm. In this way, it is possible to solve a security issue of illegal writing of a firmware package resulted from bypassing security limitations of an upgrade channel by checking consistency between running firmware after an upgrade and released firmware.

### BRIEF DESCRIPTION OF DRAWINGS

FIG. 1 is a flowchart illustrating a secure firmware upgrade method according to Embodiment 1 of the present disclosure;
FIG. 2 is a schematic diagram showing a system applying a secure firmware upgrade method according to Embodiment 1 of the present disclosure;
FIG. 3 is a block diagram showing a secure firmware upgrade device according to Embodiment 2 of the present disclosure;
FIG. 4 is a flowchart illustrating a secure firmware upgrade method according to Embodiment 3 of the present disclosure;
FIG. 5 is a schematic diagram showing a system applying a secure firmware upgrade method according to Embodiment 3 of the present disclosure; and
FIG. 6 is a block diagram showing a secure firmware upgrade device according to Embodiment 4 of the present disclosure.

### DESCRIPTION OF EMBODIMENTS

In order to make objects, technical solutions, and advantages of the present disclosure clearer, the following further describes the present disclosure in detail in combination with specific embodiments and with reference to the accompanying drawings. However, those skilled in the art understand that the present disclosure is not limited to the accompanying drawings and the following embodiments.

### Embodiment 1

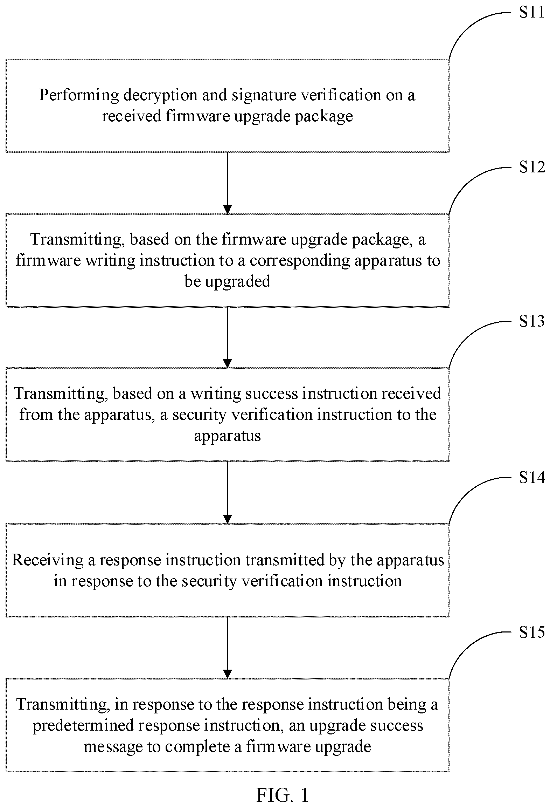

An embodiment of the present disclosure provides a secure firmware upgrade method, which is used to upgrade firmware of an apparatus, and is especially suitable for a situation where an Over-the-Air (OTA) method is used for a remote firmware upgrade. The apparatus may be a vehicle. As illustrated in FIG. 1, the method includes the following steps.

At S11, decryption and signature verification are performed on a received firmware upgrade package. During a packaging process of the firmware upgrade package, the firmware upgrade package is encrypted and added with a digital signature, so as to ensure the security of the firmware upgrade package itself. An encryption algorithm and a signature algorithm may be any achievable algorithm in the related art, and the present disclosure is not limited to this. After the firmware upgrade package is received, a decryption algorithm and the signature verification are executed. The decryption algorithm and the encryption algorithm correspond to each other. A signature verification process corresponds to a signature process.

Further, the firmware upgrade package is preconfigured with a response algorithm for generating a response instruction corresponding to the security verification instruction. During the packaging process of the firmware upgrade package, a logic implementation program that generates the response instruction corresponding to the security verification instruction is written in advance for subsequent security verification. Different versions of firmware upgrade packages correspond to a same security verification instruction and different response instructions. There is an one-to-one correspondence between the different versions of the firmware upgrade packages and security verification instructions and response instructions.

For example, for different versions of the firmware upgrade packages, the response algorithm has different response instructions, in response to the same security verification instruction a or b, as illustrated in Table 1:

**Table 1**

| Versions of the firmware upgrade package | Security verification instruction | Response instruction |
|---|---|---|
| V1.0 | a | B |
| V2.0 | a | C |
| V3.0 | a | D |
| V1.0 | b | X |
| V2.0 | b | Y |
| V3.0 | b | Z |

That is, in response to the same security verification instruction a, the response instruction of version V1.0 of the firmware upgrade package is B, the response instruction of version V2.0 of the firmware upgrade package is C, and the response instruction of version V3.0 of the firmware upgrade package is D. In response to the same security verification instruction b, the response instruction of version V1.0 of the firmware upgrade package is X, the response instruction of version V2.0 of the firmware upgrade package is Y, and the response instruction of version V3.0 of the firmware upgrade package is Z. Therefore, there is an one-to-one correspondence between the different versions V1.0, V2.0, V3.0 of the firmware upgrade packages and security verification instructions and response instructions, as illustrated in Table 1.

Based on the above response algorithm, in step S11, a version number of the firmware upgrade package is recorded in response to success of the signature verification, such that a predetermined response instruction is obtained by using the above response algorithm related to the version of the firmware upgrade package, based on the recorded version number of the firmware upgrade package. In this embodiment, the predetermined response instruction is a response instruction associated with the version of the firmware upgrade package and the security verification instruction in Table 1, such that the response instruction can be compared with a response instruction transmitted by the apparatus in a subsequent step S15.

At S12, a firmware writing instruction is transmitted, based on the received firmware upgrade package, to a corresponding apparatus to be upgraded.

In response to success of a decryption and signature verification process, the firmware upgrade package is obtained. The firmware writing instruction is transmitted, based on the received firmware upgrade package, to the corresponding apparatus to be upgraded, so as to start a firmware writing process.

The apparatus to be upgraded uses the firmware upgrade package to perform firmware writing in accordance with a writing protocol, loads the firmware upgrade package into a corresponding storage module, and updates version information of the firmware to the version of the firmware upgrade package.

In a process of writing the firmware upgrade package, security detection is performed on the apparatus to ensure security during a firmware upgrade process. Detection content includes whether there is a hijacked and/or tampered interference data packet in an internal network of the apparatus, whether a written component is in a normal working condition, and whether the apparatus is in an abnormal network connection, e.g., a connection from an attacker. If one of the above situations exists, writing of the firmware upgrade package of a current version can be stopped, and the previous firmware version can be restored.

After completing the writing of the firmware, the apparatus transmits a writing success instruction.

At S13, a security verification instruction is transmitted, based on a writing success instruction received from the apparatus to be upgraded, to the apparatus to be upgraded.

The apparatus receives the security verification instruction, and uses a response algorithm preconfigured in the written firmware upgrade package to transmit a corresponding response instruction for the version of the written firmware upgrade package.

At S14, a response instruction transmitted by the apparatus in response to the security verification instruction is received and verified.

At S15, an upgrade success message is transmitted, in response to the response instruction being a predetermined response instruction, to complete a firmware upgrade.

Specifically, after receiving the response instruction transmitted by the apparatus, the response instruction transmitted by the apparatus is compared with the predetermined response instruction pre-stored in the response algorithm preconfigured in the received firmware upgrade package. In the present embodiment, the predetermined response instruction is the above response instruction associated with the version of the firmware upgrade package and the security verification instruction. When the response instruction transmitted by the apparatus is generated by the apparatus based on the response algorithm preset in the written firmware upgrade package, then the response instruction transmitted by the apparatus is identical to the predetermined response instruction pre-stored in the response algorithm preconfigured in the received firmware upgrade package, and thus the firmware upgrade is determined to be secure; and when the response instruction transmitted by the apparatus is different from the predetermined response instruction pre-stored in the response algorithm preconfigured in the received firmware upgrade package, it is indicated that a security risk exists in the firmware upgrade package written by corresponding firmware. In this way, the firmware upgrade is determined and recorded to be abnormal, and a security warning is transmitted through a network. In addition, it is not allowed to use an OTA mode to operate the apparatus until unlocking is performed by a risk removal process.

For example, after the apparatus has completed the writing of the firmware upgrade package V1.0, a security verification instruction a is transmitted to the apparatus. The apparatus generates a response instruction H, and transmits the response instruction H back.

According to the pre-stored response algorithm preconfigured in the received firmware upgrade package, the response instruction of the firmware upgrade package V1.0 corresponding to the security verification instruction a is B, and the predetermined response instruction is B.

After the response instruction H transmitted by the apparatus in response to the security verification instruction a is received, the response instruction H transmitted by the apparatus is compared with the predetermined response instruction B pre-stored in the response algorithm preconfigured in the received firmware upgrade package V1.0. If H=B, the firmware upgrade is determined to be secure. If H≠B, it is determined and recorded that the firmware upgrade is abnormal, and a security warning is transmitted through a network. In addition, it is not allowed to use the OTA mode to operate the apparatus until unlocking is performed by the risk removal process.

Hereinafter, the secure firmware upgrade method according to Embodiment 1 of the present disclosure is described by taking an example of performing the remote firmware upgrade on the vehicle in the OTA mode.

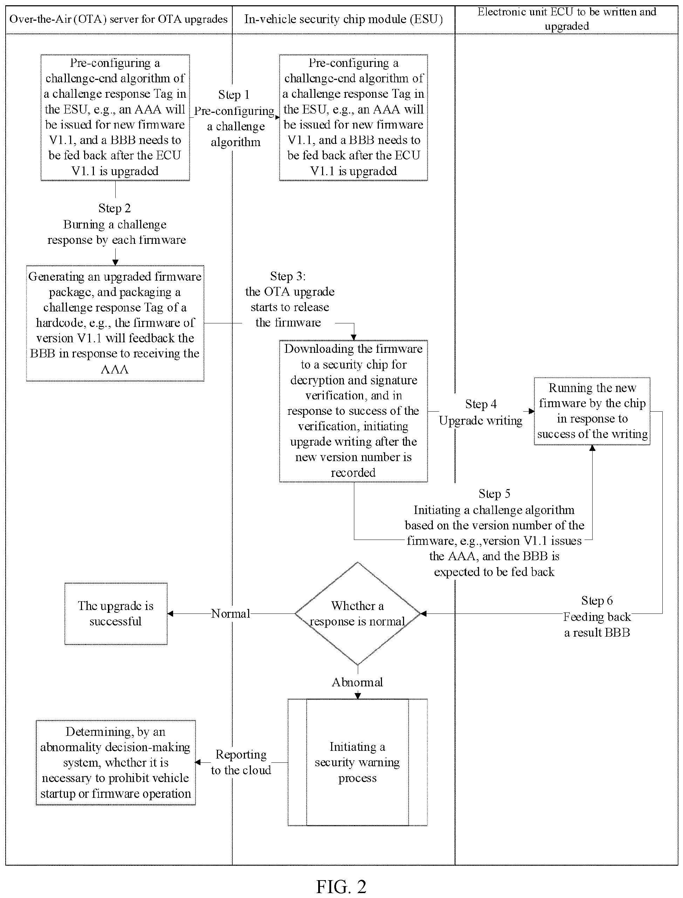

As illustrated in FIG. 2, a secure firmware upgrade system of the secure firmware upgrade method includes an OTA server for OTA upgrades, an in-vehicle security chip module ESU, and an electronic unit ECU to be written and upgraded. The OTA server stores a challenge-end algorithm, i.e., the response algorithm according to Embodiment 1 of the present disclosure, of a challenge response Tag. The in-vehicle security chip module ESU executes steps of the secure firmware upgrade method according to Embodiment 1 of the present disclosure. When there are a number of security verification instructions, the response algorithm can be as illustrated in Table 1. In this example, the challenge-end algorithm includes only one security verification instruction AAA. For example, for the firmware of version V1.1, when the security verification instruction AAA is received, a response instruction BBB is fed back.

In step 1, the OTA server transmits the challenge-end algorithm to the in-vehicle security chip module ESU, and the in-vehicle security chip module ESU pre-stores the challenge-end algorithm.

In step 2, the OTA server for OTA upgrades includes or generates a firmware package, i.e., the firmware upgrade package according to Embodiment 1 of the present disclosure, for upgrading. The challenge-end algorithm is preconfigured in the upgraded firmware package.

Since the challenge-end algorithm in this example includes only one security verification instruction AAA, pre-configuring the challenge-end algorithm in the upgraded firmware package is specifically to package a challenge response Tag of a hardcode in the upgraded firmware package. For example, for the firmware of version V1.1, when the security verification instruction AAA is received, the response instruction BBB is fed back.

In step 3, the in-vehicle security chip module ESU obtains the upgraded firmware package, downloads the upgraded firmware package to the in-vehicle security chip module ESU, and performs the decryption and signature verification. If the verification is passed, the in-vehicle security chip module ESU records the version number of the upgraded firmware package, e.g., V1.1, and transmits the firmware writing instruction.

In step 4, the in-vehicle security chip module ESU or other writing control components use the upgraded firmware package to write the firmware of the electronic unit ECU to be written and upgraded in accordance with the writing protocol. After the firmware is successfully written, the electronic unit ECU runs the new firmware.

In step 5, the in-vehicle security chip module ESU initiates the challenge-end algorithm based on the recorded version number V1.1 of the upgraded firmware package, and transmits the security verification instruction AAA to the electronic unit ECU (a predetermined response instruction BBB is expected to be fed back).

In step 6, after the electronic unit ECU receives the security verification instruction AAA transmitted by the in-vehicle security chip module ESU, the response instruction is transmitted to the security chip module ESU.

If the response instruction transmitted by the electronic unit ECU to the in-vehicle security chip module ESU is the predetermined response instruction BBB, the in-vehicle security chip module ESU determines that the response is normal, and the firmware upgrade of the electronic unit ECU is successful. If the response instruction transmitted by the electronic unit ECU to the security chip module ESU is different from the predetermined response instruction BBB, the in-vehicle security chip module ESU determines that the response is abnormal, and a security risk exists in the firmware package written by the electronic unit ECU. In this way, it is determined and recorded that the firmware upgrade is abnormal, and a security warning is transmitted by the security chip module ESU to the vehicle and/or the OTA server through the network. In addition, it is forbidden to use the OTA mode to operate the vehicle.

### Embodiment 2

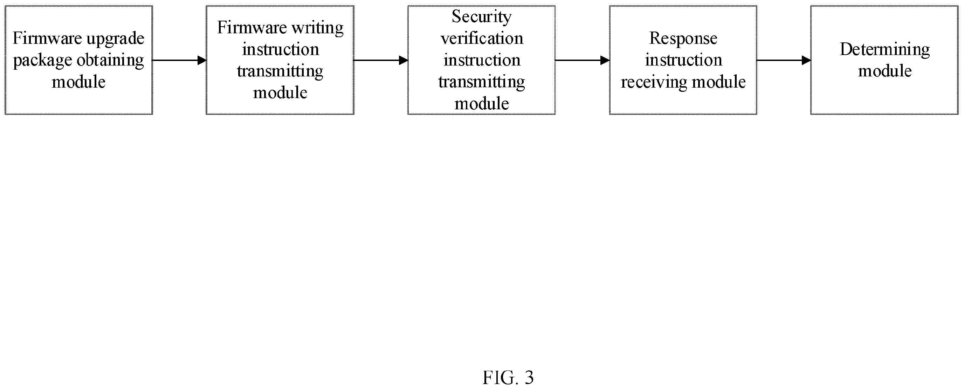

An embodiment of the present disclosure provides a secure firmware upgrade device, which is used to upgrade the firmware of the apparatus, and is especially suitable for the situation where the OTA mode is used for the remote firmware upgrade. The apparatus may be a vehicle. As illustrated in FIG. 3, the secure firmware upgrade device includes a firmware upgrade package obtaining module, a firmware writing instruction transmitting module, a security verification instruction transmitting module, a response instruction receiving module, and a determining module.

The firmware upgrade package obtaining module is configured to perform decryption and signature verification on a received firmware upgrade package. During the packaging process of the firmware upgrade package, the firmware upgrade package is encrypted and added with a digital signature, so as to ensure the security of the firmware upgrade package. The encryption algorithm and the signature algorithm may be any achievable algorithm in the related art, and the present disclosure is not limited to this. After the firmware upgrade package is received, the decryption algorithm and the signature verification are performed. The decryption algorithm and the encryption algorithm correspond to each other. A signature verification process corresponds to a signature process.

Further, the firmware upgrade package is preconfigured with a response algorithm for generating a response instruction corresponding to a security verification instruction. During a packaging process of the firmware upgrade package, a logic implementation program that generates the response instruction corresponding to the security verification instruction is written in advance for subsequent security verification. Different versions of firmware upgrade packages correspond to a same security verification instruction and different response instructions. There is an one-to-one correspondence between the different versions of the firmware upgrade packages and security verification instructions and response instructions.

For example, for different versions of the firmware upgrade packages, the response algorithm has different response instructions in response to the same security verification instruction a or b, as illustrated in Table 1. That is, in response to the same security verification instruction a, the response instruction of version V1.0 of the firmware upgrade package is B, the response instruction of version V2.0 of the firmware upgrade package is C, and the response instruction of version V3.0 of the firmware upgrade package is D. In response to the same security verification instruction b, the response instruction of version V1.0 of the firmware upgrade package is X, the response instruction of version V2.0 of the firmware upgrade package is Y, and the response instruction of version V3.0 of the firmware upgrade package is Z. Therefore, there is an one-to-one correspondence between the different versions V1.0, V2.0, V3.0 of the firmware upgrade packages and the security verification instructions and the response instructions, as illustrated in Table 1.

Based on the above response algorithm, in response to the success of the signature verification, the firmware upgrade package obtaining module is configured to record the version number of the firmware upgrade package, so as to obtain the predetermined response instruction used by the determining module. According to the recorded version number of the firmware upgrade package, using the above response algorithm related to the version of the firmware upgrade package can obtain the predetermined response instruction. In this embodiment, the predetermined response instruction is a response instruction associated with the version of the firmware upgrade package and the security verification instruction in Table 1.

The firmware writing instruction transmitting module is configured to transmit, based on the received firmware upgrade package, a firmware writing instruction to a corresponding apparatus to be upgraded.

In response to success of a decryption and signature verification process, the firmware upgrade package is obtained. The firmware writing instruction is transmitted, based on the received firmware upgrade package, to the corresponding apparatus to be upgraded, so as to start the firmware writing process.

The apparatus to be upgraded uses the firmware upgrade package to perform firmware writing in accordance with the writing protocol, loads the firmware upgrade package into a corresponding storage module, and updates the version information of the firmware to the version of the firmware upgrade package.

In a process of writing the firmware upgrade package, the firmware writing instruction transmitting module is configured to perform the security detection on the apparatus to ensure security during a firmware upgrade process. Detection content includes whether there is a hijacked and/or tampered interference data packet in the internal network of the apparatus, whether the written firmware is in a normal working condition, and whether the apparatus is in an abnormal network connection, e.g., a connection from an attacker. If one of the above situations exists, writing of the firmware upgrade package of the current version can be stopped, and the previous firmware version can be restored.

After completing the writing of the firmware, the apparatus transmits the writing success instruction.

The security verification instruction transmitting module is configured to transmit, based on a writing success instruction received from the apparatus to be upgraded, a security verification instruction to the apparatus to be upgraded. The apparatus receives the security verification instruction, and uses the response algorithm preconfigured in the written firmware upgrade package to transmit a corresponding response instruction for the version of the written firmware upgrade package.

The response instruction receiving module is configured to receive a response instruction transmitted by the apparatus in response to the security verification instruction.

The determining module is configured to transmit, in response to the response instruction being a predetermined response instruction, an upgrade success message to complete a firmware upgrade. Specifically, after receiving the response instruction transmitted by the apparatus, the determining module compares the response instruction transmitted by the apparatus with the predetermined response instruction pre-stored in the response algorithm preconfigured in the received firmware upgrade package. In the present embodiment, the predetermined response instruction is the above response instruction associated with the version of the firmware upgrade package and the security verification instruction. When the response instruction transmitted by the apparatus is generated by the apparatus based on the response algorithm preset in the written firmware upgrade package, then the response instruction transmitted by the apparatus is identical to the predetermined response instruction pre-stored in the response algorithm preconfigured in the received firmware upgrade package, and thus the determining module determines the firmware upgrade to be secure; and when the response instruction transmitted by the apparatus is different from the predetermined response instruction pre-stored in the response algorithm preconfigured in the received firmware upgrade package, it is indicated that the security risk exists in the firmware upgrade package written by corresponding firmware, the determining module determines and records the firmware upgrade to be abnormal, and the security warning is transmitted through the network. In addition, it is not allowed to use the OTA mode to operate the apparatus until unlocking is performed by the risk removal process.

For example, after the apparatus has completed the writing of the firmware upgrade package V1.0, the security verification instruction a is transmitted to the apparatus. The apparatus generates the response instruction H, and transmits the response instruction H back.

According to the pre-stored response algorithm preconfigured in the received firmware upgrade package, the response instruction of the firmware upgrade package V1.0 corresponding to the security verification instruction a is B, and the predetermined response instruction is B.

After receiving the response instruction H transmitted by the apparatus in response to the security verification instruction a, the determining module compares the response instruction H transmitted by the apparatus with the predetermined response instruction B pre-stored in the response algorithm preconfigured in the received firmware upgrade package V 1.0. If H=B, the firmware upgrade is determined to be secure. If H≠B, it is determined and recorded that the firmware upgrade is abnormal, and the security warning is transmitted through the network. In addition, it is not allowed to use the OTA mode to operate the apparatus until unlocking is performed by the risk removal process.

### Embodiment 3

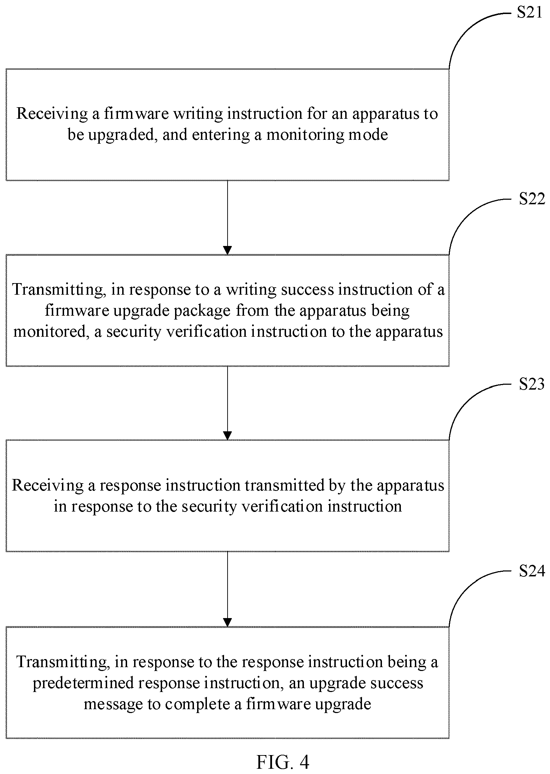

An embodiment of the present disclosure provides a secure firmware upgrade method, which is used to upgrade the firmware of the apparatus, and is especially suitable for a situation where the firmware upgrade is performed in an On Board Diagnostics (OBD) interface mode. As illustrated in FIG. 4, the method includes the following steps.

At S21, a firmware writing instruction for an apparatus to be upgraded is received, and a monitoring mode is entered.

Specifically, the writing instruction in a Controller Area Network (CAN) bus or a local area network where the apparatus is located is monitored. In response to monitoring the firmware writing instruction for the apparatus to be upgraded, the monitoring mode is entered to monitor a writing progress of the firmware.

An online diagnostic tool receives the firmware upgrade package, uses a secret key and a digital certificate to perform decryption and signature verification on the received firmware upgrade package, and uses the firmware upgrade package to write the firmware in accordance with the writing protocol. The firmware upgrade package is loaded to a corresponding storage module. The version information of the firmware is updated to the version number of the firmware upgrade package. During the packaging process of the firmware upgrade package, the firmware upgrade package is encrypted and added with a digital signature, so as to ensure the security of the firmware upgrade package. The encryption algorithm and the signature algorithm may be any achievable algorithm in the related art, and the present disclosure is not limited in this regard. After the firmware upgrade package is received, a decryption algorithm and a signature verification are performed. The decryption algorithm and the encryption algorithm correspond to each other. The signature verification process corresponds to the signature process.

Further, the firmware upgrade package is preconfigured with the response algorithm for generating a response instruction corresponding to the security verification instruction. During the packaging process of the firmware upgrade package, the logic implementation program that generates the corresponding response instruction for the security verification instruction is written in advance for subsequent security verification. Different versions of the firmware upgrade packages correspond to the same security verification instruction and different response instructions. There is an one-to-one correspondence between the different versions of the firmware upgrade packages and the security verification instructions and the response instructions.

For example, for different versions of the firmware upgrade packages, the response algorithm corresponds to the same security verification instruction a or b, and has different response instructions, as illustrated in Table 1. That is, in response to the same security verification instruction a, the response instruction of version V1.0 of the firmware upgrade package is B, the response instruction of version V2.0 of the firmware upgrade package is C, and the response instruction of version V3.0 of the firmware upgrade package is D. In response to the same security verification instruction b, the response instruction of version V1.0 of the firmware upgrade package is X, the response instruction of version V2.0 of the firmware upgrade package is Y, and the response instruction of version V3.0 of the firmware upgrade package is Z. Therefore, there is an one-to-one correspondence between the different versions V1.0, V2.0, V3.0 of the firmware upgrade packages and the security verification instructions and the response instructions, as illustrated in Table 1.

At S22, a security verification instruction is transmitted, in response to a writing success instruction of the apparatus to be upgraded being monitored, to the apparatus to be upgraded.

Based on the above response algorithm related to the version of the firmware upgrade package, the apparatus needs to transmit the response instruction and the version number of the firmware upgrade package back after receiving the security verification instruction. Under normal circumstances, the apparatus uses the response algorithm preconfigured in the written firmware upgrade package to transmit a corresponding response instruction for the firmware upgrade package of the written version.

At S23, a response instruction transmitted by the apparatus in response to the security verification instruction is received and verified.

In an embodiment, the version number of the firmware upgrade package is received based on the above response algorithm related to the version of the firmware upgrade package, together with the response instruction transmitted by the apparatus, such that the predetermined response instruction can be obtained by using, based on the received version number of the firmware upgrade package, the above response algorithm related to the version of the firmware upgrade package, that is, the response instruction associated with the version of the firmware upgrade package and the security verification instruction in Table 1, so as to facilitate a comparison between the predetermined response instruction and the response instruction transmitted by the apparatus in a subsequent step S24.

At S24, an upgrade success message is transmitted, in response to the response instruction being a predetermined response instruction, to complete a firmware upgrade. Specifically, after the response instruction transmitted by the apparatus is received, the response instruction transmitted by the apparatus is compared with the predetermined response instruction pre-stored in the response algorithm preconfigured in the firmware upgrade package. In the present embodiment, the predetermined response instruction is the above response instruction associated with the version of the firmware upgrade package and the security verification instruction. When the response instruction transmitted by the apparatus is generated by the apparatus based on the response algorithm preconfigured in the written firmware upgrade package, then the response instruction transmitted by the apparatus is identical to the predetermined response instruction pre-stored in the response algorithm preconfigured in the firmware upgrade package, and thus the firmware upgrade is determined to be secure; and when the response instruction transmitted by the apparatus is different from the predetermined response instruction pre-stored in the response algorithm preconfigured in the firmware upgrade package, it is indicated that a security risk exists in the firmware upgrade package written by corresponding firmware. In this way, the firmware upgrade is determined and recorded to be abnormal, and the security warning is transmitted through the network. In addition, it is not allowed to use an OBD mode to operate the apparatus until unlocking is performed by the risk removal process.

For example, after the apparatus has completed the writing of the firmware upgrade package V1.0, the security verification instruction a is transmitted to the apparatus. The apparatus generates the response instruction H, and transmits the response instruction H and the version number V1.0 of the firmware upgrade package back.

According to the pre-stored response algorithm preconfigured in the firmware upgrade package, the response instruction of the firmware upgrade package V1.0 corresponding to the security verification instruction a is B, and the predetermined response instruction is B.

After the response instruction H transmitted by the apparatus in response to the security verification instruction a and the version number V1.0 of the firmware upgrade package are received, the response instruction H transmitted by the apparatus is compared with the predetermined response instruction B pre-stored in the response algorithm preconfigured in the firmware upgrade package V1.0. If H=B, the firmware upgrade is determined to be secure. If H≠B, it is determined and recorded that the firmware upgrade is abnormal, and the security warning is transmitted through the network. In addition, it is not allowed to use the OBD mode to operate the apparatus until unlocking is performed by the risk removal process.

Hereinafter, the secure firmware upgrade method according to Embodiment 3 of the present disclosure will be described by taking an example of performing a firmware upgrade on the vehicle in the OBD interface mode.

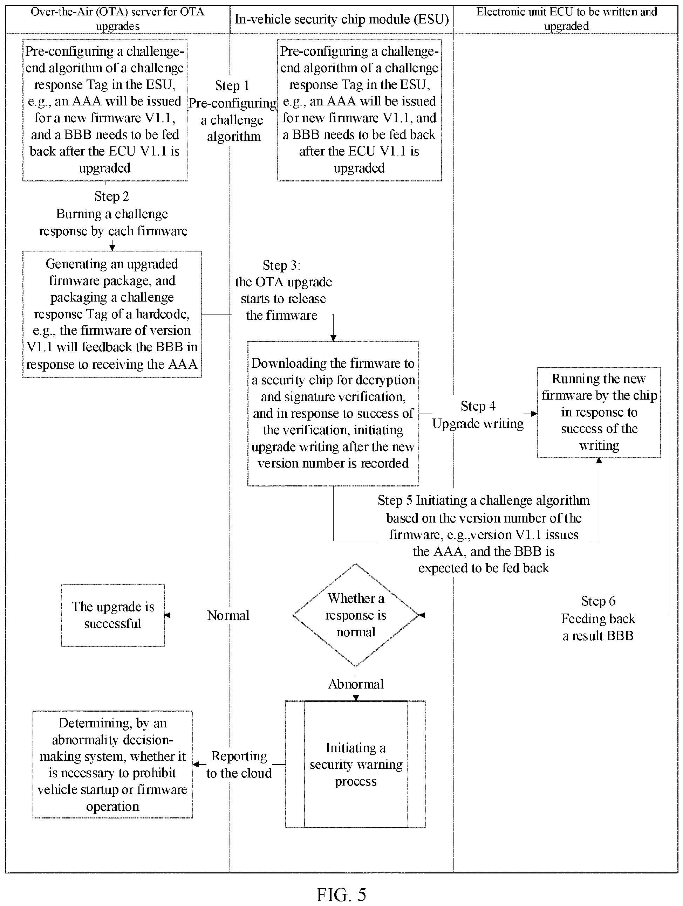

As illustrated in FIG. 5, a secure firmware upgrade system of the secure firmware upgrade method includes a firmware generation server, a diagnostic tool, an in-vehicle security chip module ESU, and an electronic unit ECU to be written and upgraded. The firmware generation server stores the challenge-end algorithm, i.e., the response algorithm according to Embodiment 3 of the present disclosure, of the challenge response Tag. The in-vehicle security chip module ESU executes steps of the secure firmware upgrade method according to Embodiment 3 of the present disclosure. When there are a number of security verification instructions, the response algorithm can be as illustrated in Table 1. In this example, the challenge-end algorithm includes only one security verification instruction AAA. For example, for the firmware of version V1.1, when the security verification instruction AAA is received, the response instruction BBB is fed back.

In step 1, the firmware generation server transmits the challenge-end algorithm to the in-vehicle security chip module ESU, and the in-vehicle security chip module ESU pre-stores the challenge-end algorithm.

In step 2, a firmware package for upgrading is generated in the firmware generation server, i.e., the firmware upgrade package according to Embodiment 1 of the present disclosure. The challenge-end algorithm is preconfigured in the upgraded firmware package.

Since the challenge-end algorithm in this example includes only one security verification instruction AAA, pre-configuring the challenge-end algorithm in the upgraded firmware package is specifically to package a challenge response Tag of a hardcode in the upgraded firmware package. For example, for the firmware of version V1.1, when the security verification instruction AAA is received, the response instruction BBB is fed back.

In step 3, the diagnostic tool obtains the upgraded firmware package from the firmware generation server, e.g., the firmware package of version V1.1. The diagnostic tool is physically connected to an OBD interface of the vehicle to perform upgrade writing of the firmware of the electronic component ECU.

In step 4, the diagnostic tool uses the upgraded firmware package to write, based on the writing protocol, the firmware of the electronic unit ECU to be written and upgraded.

After the firmware is successfully written, the electronic unit ECU runs a new firmware.

In step 5, the in-vehicle security chip module ESU monitors the writing instruction in the CAN bus or the local area network where the vehicle is located. In response to monitoring the firmware writing instruction for the electronic unit ECU to be written and upgraded, the monitoring mode is entered to monitor the writing progress of the firmware.

When the in-vehicle security chip module ESU monitors that the electronic unit ECU has completed the writing of the upgraded firmware package, the in-vehicle security chip module ESU initiates the challenge-end algorithm to the electronic unit ECU, and transmits the security verification instruction AAA to the electronic unit ECU.

In step 6, after the electronic unit ECU receives the security verification instruction AAA transmitted by the in-vehicle security chip module ESU, the electronic unit ECU transmits the response instruction and the version number V1.1 of the upgraded firmware package to the security chip module ESU.

The in-vehicle security chip module ESU uses the pre-stored challenge-end algorithm to obtain, based on the version number V1.1 of the firmware package transmitted by the electronic unit ECU, the predetermined response instruction BBB that is expected to be fed back.

If the response instruction transmitted by the electronic unit ECU to the in-vehicle security chip module ESU is the predetermined response instruction BBB, the in-vehicle security chip module ESU determines that the response is normal, and the firmware upgrade of the electronic unit ECU is successful. If the response instruction transmitted by the electronic unit ECU to the security chip module ESU is different from the predetermined response instruction BBB, the in-vehicle security chip module ESU determines that the response is abnormal, and a security risk exists in the firmware package written by the electronic unit ECU. In this way, it is determined and recorded that the firmware upgrade is abnormal, and a security warning is transmitted by the security chip module ESU to the vehicle and/or the firmware generation server through the network. In addition, it is forbidden to use the OTA mode to operate the vehicle.

### Embodiment 4

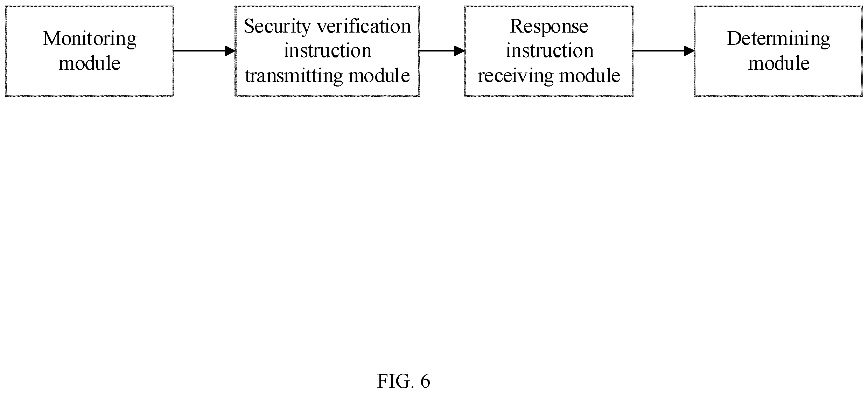

An embodiment of the present disclosure provides a secure firmware upgrade device, which is used to upgrade the firmware of the apparatus, and is especially suitable for the situation where the firmware upgrade is performed in the OBD interface mode. The secure firmware upgrade device may be a vehicle. As illustrated in FIG. 6, the secure firmware upgrade device includes a monitoring module, a security verification instruction transmitting module, a response instruction receiving module, and a determining module.

The monitoring module is configured to receive a firmware writing instruction for an apparatus to be upgraded, and enter a monitoring mode.

Specifically, the writing instruction in the CAN bus or the local area network where the apparatus is located is monitored. In response to monitoring the firmware writing instruction for the apparatus to be upgraded, the monitoring mode is entered to monitor the writing progress of the firmware.

The online diagnostic tool receives the firmware upgrade package, uses the secret key and the digital certificate to perform decryption and signature verification on the received firmware upgrade package, and uses the firmware upgrade package to write the firmware in accordance with the writing protocol. The firmware upgrade package is loaded to a corresponding storage module. The version information of the firmware is updated to the version number of the firmware upgrade package. During the packaging process of the firmware upgrade package, the firmware upgrade package is encrypted and added with the digital signature, so as to ensure the security of the firmware upgrade package. The encryption algorithm and the signature algorithm may be any achievable algorithm in the related art, and the present disclosure is not limited to this. After the firmware upgrade package is received, the decryption algorithm and the signature verification are performed. The decryption algorithm and the encryption algorithm correspond to each other. The signature verification process corresponds to the signature process.

Further, the firmware upgrade package is preconfigured with the response algorithm for generating a response instruction corresponding to the security verification instruction. During the packaging process of the firmware upgrade package, the logic implementation program that generates the corresponding response instruction for the security verification instruction is written in advance for subsequent security verification. Different versions of the firmware upgrade packages correspond to the same security verification instruction and different response instructions. There is an one-to-one correspondence between the different versions of the firmware upgrade packages and the security verification instructions and the response instructions.

For example, for different versions of the firmware upgrade packages, the response algorithm corresponds to the same security verification instruction a or b, and has different response instructions, as illustrated in Table 1. That is, in response to the same security verification instruction a, the response instruction of version V1.0 of the firmware upgrade package is B, the response instruction of version V2.0 of the firmware upgrade package is C, and the response instruction of version V3.0 of the firmware upgrade package is D. In response to the same security verification instruction b, the response instruction of version V1.0 of the firmware upgrade package is X, the response instruction of version V2.0 of the firmware upgrade package is Y, and the response instruction of version V3.0 of the firmware upgrade package is Z. Therefore, there is an one-to-one correspondence between the different versions V1.0, V2.0, V3.0 of the firmware upgrade packages and the security verification instructions and the response instructions, as illustrated in Table 1.

The security verification instruction transmitting module is configured to transmit, in response to a writing success instruction of the apparatus to be upgraded being monitored by the monitoring module, a security verification instruction to the apparatus to be upgraded.

Based on the above response algorithm related to the version of the firmware upgrade package, the apparatus needs to transmit the response instruction and the version number of the firmware upgrade package back after receiving the security verification instruction. Under normal circumstances, the apparatus uses the response algorithm preconfigured in the written firmware upgrade package to transmit a corresponding response instruction for the firmware upgrade package of the written version.

The response instruction receiving module is configured to receive a response instruction transmitted by the apparatus in response to the security verification instruction.

In an embodiment, the response instruction receiving module is configured to receive a version number of the firmware upgrade package based on the above response algorithm related to the version of the firmware upgrade package, together with the response instruction transmitted by the apparatus, such that the predetermined response instruction used by the determining module can be obtained. the predetermined response instruction may be obtained by using, based on the received version number of the firmware upgrade package, the above response algorithm related to the version of the firmware upgrade package, that is, the response instruction associated with the version of the firmware upgrade package and the security verification instruction in Table 1.

The determining module is configured to transmit, in response to the response instruction being a predetermined response instruction, an upgrade success message to complete a firmware upgrade. Specifically, after receiving the response instruction transmitted by the apparatus, the determining module compares the response instruction transmitted by the apparatus with the predetermined response instruction pre-stored in the response algorithm preconfigured in the firmware upgrade package. In an embodiment, the predetermined response instruction is the above response instruction associated with the version of the firmware upgrade package and the security verification instruction. If the response instruction transmitted by the apparatus is generated by the apparatus based on the response algorithm preconfigured in the written firmware upgrade package, then the response instruction transmitted by the apparatus is identical to the predetermined response instruction pre-stored in the response algorithm preconfigured in the firmware upgrade package, and thus the determining module determines the firmware upgrade to be secure; and when the response instruction transmitted by the apparatus is different from the predetermined response instruction pre-stored in the response algorithm preconfigured in the firmware upgrade package, it is indicated that a security risk exists in the firmware upgrade package written by corresponding firmware. In this way, the determining module determines and records that the firmware upgrade is abnormal, and the security warning is transmitted through the network. In addition, it is not allowed to use the OBD mode to operate the apparatus until unlocking is performed by the risk removal process.

For example, after the apparatus has completed the writing of the firmware upgrade package V1.0, the security verification instruction a is transmitted to the apparatus. The apparatus generates the response instruction H, and transmits the response instruction H and the version number V1.0 of the firmware upgrade package back.

According to the pre-stored response algorithm preconfigured in the firmware upgrade package, the response instruction of the firmware upgrade package V1.0 corresponding to the security verification instruction a is B, and the predetermined response instruction is B.

After receiving the response instruction H transmitted by the apparatus in response to the security verification instruction a and the version number V1.0 of the firmware upgrade package, the determining module compares the response instruction H transmitted by the apparatus with the predetermined response instruction B pre-stored in the response algorithm preconfigured in the firmware upgrade package V1.0. If H=B, the firmware upgrade is determined to be secure. If H#B, it is determined and recorded that the firmware upgrade is abnormal, and the security warning is transmitted through the network. In addition, it is not allowed to use the OBD mode to operate the apparatus until unlocking is performed by the risk removal process.

An embodiment of the present disclosure also provides an in-vehicle system. The in-vehicle system is built with the secure firmware upgrade device based on an OTA remote upgrade described in Embodiment 2 of the present disclosure and/or the secure firmware upgrade device based on the OBD interface mode described in Embodiment 4 of the present disclosure. The secure firmware upgrade device controls the vehicle to perform a firmware upgrade, thereby ensuring a secure upgrade of the firmware.

An embodiment of the present disclosure also provides a vehicle. The vehicle includes the above in-vehicle system, such that the vehicle has a function for a secure firmware upgrade.

An embodiment of the present disclosure also provides a computer-readable storage medium having a computer program stored thereon. The computer program, when executed by a processor, implements steps of the above method.

An embodiment of the present disclosure also provides a computer device. The computer device includes a memory, a processor, and a computer program stored on the memory and executable on the processor. The processor implements the steps of the above method when executing the program.

The logic and/or step described in other manners herein or shown in the flow chart, for example, a particular sequence table of executable instructions for realizing the logical function, may be specifically achieved in any computer-readable medium to be used by an instruction execution system, device or equipment (such as a computer-based system, a system including processors or other systems capable of obtaining instructions from the instruction execution system, device and equipment and executing the instructions), or to be used in combination with the instruction execution system, device and equipment. As to the specification, the "computer-readable medium" may be any device adaptive for including, storing, communicating, propagating or transferring programs to be used by or in combination with the instruction execution system, device or equipment.

More specific examples of the computer-readable medium include but are not limited to: an electronic connection (an electronic device) with one or more wires, a portable computer enclosure (a magnetic device), a Random Access Memory (RAM), a Read-Only Memory (ROM), an Erasable Programmable Read-Only Memory (EPROM or a flash memory), an optical fiber device, and a portable Compact Disk Read-Only Memory (CDROM). In addition, the computer-readable medium may even be a paper or other appropriate medium capable of printing programs thereon, for a reason that, for example, the paper or other appropriate medium may be optically scanned and then edited, decrypted or processed with other appropriate methods when necessary to obtain the programs in an electric manner, and then the programs may be stored in computer memories.

It should be understood that each part of the present disclosure may be realized by the hardware, software, firmware or their combination. In the above embodiments, a plurality of steps or methods may be realized by the software or firmware stored in the memory and executed by an appropriate instruction execution system. For example, if it is achieved by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a Programmable Gate Array (PGA), a Field Programmable Gate Array (FPGA), etc.

## Claims

1. A secure firmware upgrade method, **characterized in that**, the method is applied in an in-vehicle security chip module, ESU, and the method comprises:
performing (S11) decryption and signature verification on a received firmware upgrade package;
transmitting (S12), based on the firmware upgrade package, a firmware writing instruction to an electronic unit, ECU, to be upgraded;
transmitting (S13), based on a writing success instruction received from the ECU, a security verification instruction to the ECU;
receiving (S14) and verifying a response instruction transmitted by the ECU in response to the security verification instruction; and
transmitting (S15), in response to the response instruction being a predetermined response instruction, an upgrade success message to complete a firmware upgrade;
wherein the firmware upgrade package is preconfigured with a response algorithm for generating the response instruction corresponding to the security verification instruction, and wherein for different versions of the firmware upgrade packages, the response algorithm has different response instructions, in response to the same security verification instruction,
and there is an one-to-one correspondence between pairs of versions of the firmware upgrade packages and security verification instructions and response instructions.

2. The secure firmware upgrade method according to claim 1, wherein said performing decryption and signature verification on the received firmware upgrade package comprises recording, in response to success of the signature verification, a version number of the firmware upgrade package.

3. The secure firmware upgrade method according to claim 1, wherein said verifying the response instruction comprises:
determining the firmware upgrade to be secure, when the response instruction transmitted by the ECU is identical to the predetermined response instruction pre-stored in the response algorithm preconfigured in the received firmware upgrade package; and
determining the firmware upgrade to be abnormal, when the response instruction transmitted by the ECU is different from the predetermined response instruction pre-stored in the response algorithm preconfigured in the received firmware upgrade package.

4. The secure firmware upgrade method according to claim 1, wherein during writing of the firmware upgrade package, security detection is performed on the ECU to ensure security during the firmware upgrade.

5. The secure firmware upgrade method according to claim 1, further comprising: transmitting an abnormality warning in response to the response instruction being inconsistent with the predetermined response instruction.

6. A secure firmware upgrade device, **characterized in that**, the device is applied in an in-vehicle security chip module, ESU, and the device comprises a firmware upgrade package obtaining module, a firmware writing instruction transmitting module, a security verification instruction transmitting module, a response instruction receiving module, and a determining module, wherein
the firmware upgrade package obtaining module is configured to perform (S11) decryption and signature verification on a received firmware upgrade package;
the firmware writing instruction transmitting module is configured to transmit (S12), based on the firmware upgrade package, a firmware writing instruction to an electronic unit, ECU, to be upgraded;
the security verification instruction transmitting module is configured to transmit (S13), based on a writing success instruction received from the ECU, a security verification instruction to the ECU;
the response instruction receiving module is configured to receive (S14) a response instruction transmitted by the ECU in response to the security verification instruction; and
the determining module is configured to transmit (S15), in response to the response instruction being a predetermined response instruction, an upgrade success message to complete a firmware upgrade;
wherein the firmware upgrade package is preconfigured with a response algorithm for generating the response instruction corresponding to the security verification instruction, and wherein for different versions of the firmware upgrade packages, the response algorithm has different response instructions, in response to the same security verification instruction,
and there is an one-to-one correspondence between pairs of versions of the firmware upgrade packages and security verification instructions and response instructions.

7. The secure firmware upgrade device according to claim 6, wherein the firmware upgrade package obtaining module is further configured to record, in response to success of the signature verification, a version number of the firmware upgrade package.

8. The secure firmware upgrade device according to claim 6, wherein during writing of the firmware upgrade package, the firmware writing instruction transmitting module is further configured to perform security detection on the ECU to ensure security during the firmware upgrade.

## Patentansprüche

1. Gesichertes Firmware-Aktualisierungsverfahren, **dadurch gekennzeichnet, dass** das Verfahren in einem fahrzeuginternen Sicherheitschipmodul, ESU, angewendet wird und das Verfahren aufweist:
Durchführen (S11) der Entschlüsselung und Signaturprüfung eines empfangenen Firmware-Aktualisierungspakets;
Übertragen (S12) einer Firmware-Schreibanweisung auf der Grundlage des Firmware-Aktualisierungspakets an eine zu aktualisierende elektronische Einheit, ECU;
Übertragen (S13) einer Sicherheitsverifizierungsanweisung an die ECU auf der Grundlage einer von der ECU empfangenen Schreiberfolgsanweisung;
Empfangen (S14) und Verifizieren einer Antwortanweisung, die von der ECU als Reaktion auf die Sicherheitsverifizierungsanweisung gesendet wurde; und
Senden (S15) einer Aktualisierungs-Erfolgsnachricht, um ein Firmware-Aktualisierung abzuschließen, wenn die Antwortanweisung eine vorbestimmte Antwortanweisung ist;
wobei das Firmware-Aktualisierungspaket mit einem Antwortalgorithmus zum Erzeugen der Antwortanweisung, die der Sicherheitsverifizierungsanweisung entspricht, vorkonfiguriert ist, und wobei für verschiedene Versionen der Firmware-Aktualisierungspakete der Antwortalgorithmus verschiedene Antwortanweisungen als Reaktion auf dieselbe Sicherheitsverifizierungsanweisung hat,
und wobei eine eins-zu-eins-Entsprechung zwischen den Versionspaaren der Firmware-Aktualisierungspakete und Sicherheitsverifizierungsanweisungen und den Antwortanweisungen besteht.

2. Gesichertes Firmware-Aktualisierungsverfahren nach Anspruch 1, bei dem das Durchführen der Entschlüsselung und der Signaturprüfung des empfangenen Firmware-Aktualisierungspakets die Aufzeichnung einer Versionsnummer des Firmware-Aktualisierungspakets als Reaktion auf den Erfolg der Signaturverifizierung aufweist.

3. Gesichertes Firmware-Aktualisierungsverfahren nach Anspruch 1, bei dem das Verifizieren der Antwortanweisung aufweist:
Bestimmen der Firmware-Aktualisierung als sicher, wenn die von der ECU gesendete Antwortanweisung identisch mit der vorbestimmten Antwortanweisung ist, die in dem Antwortalgorithmus gespeichert ist, der in dem empfangenen Firmware-Aktualisierungspaket vorkonfiguriert ist; und
Bestimmen der Firmware-Aktualisierung als anormal, wenn die von der ECU gesendete Antwortanweisung sich von der vorbestimmten Antwortanweisung unterscheidet, die in dem Antwortalgorithmus gespeichert ist, der in dem empfangenen Firmware-Aktualisierungspaket vorkonfiguriert ist.

4. Gesichertes Firmware-Aktualisierungsverfahren nach Anspruch 1, bei dem während des Schreibens des Firmware-Aktualisierungspakets eine Sicherheitserkennung auf dem ECU durchgeführt wird, um die Sicherheit während der Firmware-Aktualisierung zu gewährleisten.

5. Gesichertes Firmware-Aktualisierungsverfahren nach Anspruch 1, das ferner Folgendes aufweist: Übertragen einer Anomaliewarnung als Reaktion darauf, dass die Antwortanweisung nicht mit der vorgegebenen Antwortanweisung übereinstimmt.

6. Gesicherte Firmware-Aktualisierungsvorrichtung, **dadurch gekennzeichnet, dass** die Vorrichtung in einem fahrzeuginternen Sicherheitschipmodul, ESU, verwendet wird und die Vorrichtung ein Firmware-Aktualisierungspaket-Erhaltungsmodul, ein Firmware-Schreibanweisungsübertragungsmodul, ein Sicherheitsverifizierungsanweisungsübertragungsmodul, ein Antwortanweisungsempfangsmodul und ein Bestimmungsmodul aufweist, wobei
das Firmware-Aktualisierungspaket-Erhaltungsmodul so konfiguriert ist, dass es die Entschlüsselung und Signaturprüfung eines empfangenen Firmware-Aktualisierungpakets durchführt (S11);
das Firmware-Schreibanweisungsübertragungsmodul so konfiguriert ist, dass es auf der Grundlage des Firmware-Aktualisierungspakets eine Firmware-Schreibanweisung an eine zu aktualisierende elektronische Einheit, ECU, sendet (S12);
das Sicherheitsverifizierungsanweisungsübertragungsmodul so konfiguriert ist, dass es basierend auf einer von der ECU empfangenen Schreiberfolgsanweisung eine Sicherheitsverifizierungsanweisung an die ECU sendet (S13);
das Modul zum Empfangen von Antwortanweisungen so konfiguriert ist, dass es eine Antwortanweisung empfängt (S14), die von der ECU als Reaktion auf die Sicherheitsverifizierungsanweisung gesendet wird; und
das Antwortanweisungsempfangsmodul so konfiguriert ist, dass es als Reaktion darauf, dass die Antwortanweisung eine vorbestimmte Antwortanweisung ist, eine Aktualisierungserfolgsnachricht sendet (S15), um eine Firmware-Aktualisierung abzuschließen;
wobei das Firmware-Aktualisierungspaket mit einem Antwortalgorithmus zum Erzeugen der Antwortanweisung, die der Sicherheitsverifizierungsanweisung entspricht, vorkonfiguriert ist, und
wobei für verschiedene Versionen der Firmware-Aktualisierungspakete der Antwortalgorithmus verschiedene Antwortanweisungen als Antwort auf die gleiche Sicherheitsverifizierungsanweisung hat,
und wobei eine eins-zu-eins-Entsprechung zwischen den Versionspaaren der Firmware-Aktualisierungspakete und den Sicherheitsverifizierungsanweisungen und den Antwortanweisungen besteht.

7. Gesicherte Firmware-Aktualisierungsvorrichtung nach Anspruch 6, bei der das Firmware-Aktualisierungspaket-Erhaltungsmodul ferner so konfiguriert ist, dass es als Reaktion auf den Erfolg der Signaturverifizierung eine Versionsnummer des Firmware-Aktualisierungspakets aufzeichnet.

8. Gesicherte Firmware-Aktualisierungsvorrichtung nach Anspruch 6, bei der während des Schreibens des Firmware-Aktualisierungspakets Firmware-Schreibanweisungsübertragungsmodul ferner so konfiguriert ist, dass es eine Sicherheitserkennung auf dem ECU durchführt, um die Sicherheit während der Firmware-Aktualisierung zu gewährleisten.

## Revendications

1. Procédé de mise à jour sécurisée de microprogramme, **caractérisé en ce que** le procédé est appliqué dans un module de puce de sécurité interne au véhicule, ESU, et le procédé comprend:
exécuter (S11) du décryptage et de la vérification de la signature d'un paquet de mise à jour de microprogramme reçu;
transmettre (S12) une instruction d'écriture de micrologiciel sur la base du paquet de mise à jour de microprogramme à une unité électronique, ECU, devant être mise à jour;
transmettre (S13) une instruction de vérification de sécurité à l'ECU sur la base d'une instruction de suivi d'enregistreur reçue du ECU;
recevoir (S14) et la vérifier d'une instruction de réponse envoyée par l'ECU en réponse à l'instruction de vérification de la sécurité; et
envoyer (S15) un message de succès de mise à jour pour terminer une mise à jour de microprogramme si l'instruction de réponse est une instruction de réponse prédéterminée;
dans lequel le paquet de mise à jour de microprogramme est préconfiguré avec un algorithme de réponse pour générer l'instruction de réponse correspondant à l'instruction de vérification de sécurité, et dans lequel, pour différentes versions des paquets de mise à jour de microprogramme, l'algorithme de réponse a différentes instructions de réponse en réponse à la même instruction de vérification de sécurité, et dans lequel il existe une correspondance biunivoque entre les paires de versions des paquets de mise à jour de microprogramme et des instructions de vérification de la sécurité et les instructions de réponse.

2. Procédé de mise à jour sécurisée de microprogramme selon la revendication 1, dans lequel l'exécution du décryptage et de la vérification de la signature du paquet de mise à jour de microprogramme reçu comprend l'enregistrement d'un numéro de version du paquet de mise à jour de microprogramme en réponse au succès de la vérification de la signature.

3. Procédé de mise à jour sécurisée de microprogramme selon la revendication 1, dans lequel la vérification de l'instruction de réponse comprend:
déterminer que la mise à jour de microprogramme est sûre si l'instruction de réponse envoyée par l'ECU est identique à l'instruction de réponse prédéterminée stockée dans l'algorithme de réponse préconfiguré dans le paquet de mise à jour de microprogramme reçu; et
déterminer que la mise à jour de microprogramme est anormale si l'instruction de réponse envoyée par l'ECU est différente de l'instruction de réponse prédéterminée stockée dans l'algorithme de réponse préconfiguré dans le paquets de mise à jour de microprogramme reçu.

4. Procédé de mise à jour sécurisée de microprogramme selon la revendication 1, dans lequel une détection de sécurité est effectuée sur l'ECU pendant l'écriture du paquet de mise à jour de microprogramme afin d'assurer la sécurité pendant la mise à jour de microprogramme.

5. Procédé de mise à jour sécurisée de microprogramme selon la revendication 1, comprenant en outre ce qui suit: transmettre d'une alerte d'anomalie en réponse au fait que l'instruction de réponse ne correspond pas à l'instruction de réponse prédéterminée.

6. Dispositif de mise à jour sécurisée de microprogramme, **caractérisé en ce que** le dispositif est utilisé dans un module de puce de sécurité embarqué, ESU, et le dispositif comprend un module d'obtention de paquet de mise à jour de microprogramme, un module de transmission d'instruction d'écriture de microprogramme, un module de transmission d'instruction de vérification de sécurité, un module de réception d'instruction de réponse et un module de détermination, dans lequel
le module d'obtention de paquet de mise à jour de microprogramme est configuré pour effectuer le décryptage et la vérification de la signature d'un paquet de mise à jour de microprogramme (S11) ;
le module de transmission d'instruction d'écriture de microprogramme est configuré pour envoyer (S12) une instruction d'écriture de microprogramme à une unité électronique, ECU, devant être mise à jour, sur la base du paquet de mise à jour de microprogramme;
le module de transmission d'instruction de vérification de sécurité est configuré pour transmettre une instruction de vérification de sécurité à l'ECU sur la base d'une instruction de suivi d'enregistreur reçue de l'ECU (S13);
le module de réception d'instruction de réponse est configuré pour recevoir une instruction de réponse (S14) envoyée par l'ECU en réponse à l'instruction de vérification de sécurité; et
le module de réception d'instruction de réponse est configuré pour envoyer (S15) un message de réussite de mise à jour en réponse au fait que l'instruction de réponse est une instruction de réponse prédéterminée, afin d'achever une mise à jour de microprogramme;
dans lequel le paquet de mise à jour de microprogramme est préconfiguré avec un algorithme de réponse pour générer l'instruction de réponse correspondant à l'instruction de vérification de sécurité, et dans lequel, pour différentes versions des paquets de mise à jour de microprogramme, l'algorithme de réponse a différentes instructions de réponse en réponse à la même instruction de vérification de sécurité, et dans lequel il existe une correspondance biunivoque entre les paires de versions des paquets de mise à jour de microprogramme et les instructions de vérification de la sécurité et les instructions de réponse.

7. Dispositif de mise à jour sécurisée de microprogramme selon la revendication 6, dans lequel le module d'obtention de paquet de mise à jour de microprogramme est en outre configuré pour enregistrer un numéro de version du paquet de mise à jour de microprogramme en réponse à la réussite de la vérification de signature.

8. Dispositif de mise à jour sécurisée de microprogramme selon la revendication 6, dans lequel, pendant l'écriture du paquet de mise à jour de microprogramme, le module de transmission d'instruction d'écriture de microprogramme est en outre configuré pour effectuer une détection de sécurité sur l'ECU afin d'assurer la sécurité pendant la mise à jour de microprogramme.
